# EUROPEAN PATENT APPLICATION

(11) **EP 1 808 979 A1**
(43) Date of publication of application: **18.07.2007**
(21) Application number: 07425003.6
(22) Date of filing: 02.01.2007
(51) Int. Cl.: H04L 12/14, H04M 17/00

(54) **Access system for Wi-Fi devices**

(30) Priority: 11.01.2006 IT BS20060003
(71) Applicant: Lar Sistemi S.r.l., 25082 Botticino (Brescia) (IT)
(72) Inventor: Lonati, Pietro Antonio, 25082 Botticino (Brescia) (IT)
(74) Representative: Sangiacomo, Fulvia

(57) **Abstract**

This invention concerns a method and equipment to enable a user to access the Internet using wireless devices, by means of a Wi-Fi connection, proceeding by: entering identification data, represented as a minimum the cell phone number of the user, in a stable equipment set up for distributing Wi-Fi connections; a payment for purchasing a time based Wi-Fi access connection, distribution from the stable equipment of configuration data to activate the connection to the Internet using an enabled movable device and a Wi-Fi connection, and an automatic interruption of the connection on termination of the time purchased and deactivation of the assigned configuration data.

## Description

### Field of the Invention

This invention concerns in general communication services and in particular a method of distribution of services by connecting to the Internet by means of Wi-Fi devices in public places.

### State of the Technique

Traditionally, access to the Internet envisages the availability of a computer, a modem, a link up to a telephone line, a connection supplied either by an Internet Service Provider (ISP) or access supplier. Connection by means of a telephone line is supplied after stipulating a contract, on the basis of which, the user is supplied with configuration data to activate access to the Internet and connected services (mail, Telnet, etc.)

The use of WIRELESS technology which enables compatible devices to be connected to each other without the use of cables, is becoming widespread. The wireless devices use three main connecting methods: **Bluetooth®** that uses a radio frequency available on a global level to connect devices, such as portable computers, cell phones, photo cameras, printers, keyboards that are provided with it ...., which are within a certain range, usually ten metres; **Wi-Fi** that stands for a standard technological Wireless Fidelity based on radio wave transmissions at 2,4 Ghz; and **GPRS/3G** that indicates technology straddling the second (2G) and third generation (3G) digital mobile telecommunication using the cell phone networks.

In particular, the Wi-Fi connection is a standard transmission using radio waves which enable a wireless connection network to be established within a limited area: from about thirty to a hundred metres in a built up area, and up to three hundred metres in an area without obstacles.

To access a Wi-Fi service all that is required is either a notebook or a PDA-Palm or multimedia terminals, set-up for this standard, equipped for example with an appropriate board for connecting up to Wi-Fi, and go to an area covered by WI-FI technology, called a hotspot.

Here, the signal coverage is carried out by a device that acts as an Access Point, enabling, connection to the Internet, within the signal coverage area. Access to the service is possible by purchasing a prepaid Card available for different amounts, based on consumption logic, purchased at an authorised reseller and usually with recovery of residual time. Besides the prepaid cards there are other methods which however require the intervention of a human operator for the collecting of identification data.

Therefore, even when there is Wi-Fi coverage, and even if devices to connect up to Wi-Fi are available, if a prepaid card is not accessible, it is not possible to autonomously activate a connection, even if only momentarily, to read one's own mail or to navigate.

While the installation of an Access Point and consequently the setting up of a Hotpoint is very simple, in fact any place attended by people can become one, whereas providing a place, run by a human operator, to handle the issuing of prepaid cards and to collect identification as required by the law in force, may be problematic and anti-economic.

Recently a device for Wi-Fi connections, in the configuration of an automatic distributor was presented, that, against payment, enables temporary acquisition of connections to the Internet using Wi-Fi devices.

In response to the choice and payment by the user, the distributor issues a pass complete with the data for the configuration of the system and activation of the connection.

This solution however not only does not provide certain identification of the user, who remains anonymous, but the loss of the pass may enable any other person who finds it to use it to gain access.

### Objective of the Invention

This invention has the objective to create the conditions to gain access to Wi-Fi- services from licensed devices, only in response to certain identification of the user, by means of equipment in the form of an automatic distributor.

Such an objective is achieved in compliance with the invention of a certain identification method of the user according to claim 1, and with a system of devices according to claim 10 that therefore requires, the availability of an automatic Wi-Fi services distributor; a movable device enabled for Wi-Fi connections to the Internet, such as a note-book, a Palm or the like; and possibly an enabled cell phone.

The innovative aspect of the invention lies mainly in the procedure of identification of the user, which according to the laws in force, is indispensable for the granting of connection to the Internet.

This identification is based on the collection and filing of an established system of the personal data of the user detectable, singularly or in combination, through his cell phone number, by self certification or from reading identification documents, such as an identity card, a driving license, a credit card, a sanitary card or the like.

It is in fact well known that in order for a telephone number, including a cell phone, to be issued, a contract requires to be stipulated between the company and the user in which, by law, all the identification data of the contracting party must be provided. Therefore a cell phone number becomes an unambiguous piece of identification of a user, guaranteeing the same unambiguity and certainty of the data acquired from personal identification documents. However, the system of the invention may also be provided with the possibility of operating with the more common identification documents.

The automatic distributor will start to operate only after certain identification of the user has been established, making it entitled, by law, to issue the Wi-Fi connection by payment, which would otherwise not be allowed.

The system is particularly useful for occasional users, those who in general do not use prepaid cards, who, being temporarily in a place or requiring to make urgent connections, for example to read the mail, can take advantage of this service even for extremely brief periods and at a very reduced cost.

The invention will moreover be described in the continuation making reference to the enclosed diagrammatic drawing which schematizes a Wi-Fi service distributor.

### Detailed description of the Invention

In order to implement the invention a fixed device in the form of an automatic distributor 11 is needed on the one hand and on the other a movable Wi-Fi device, such as a notebook, a Palm or the like 12 enabled for Wi-Fi connection, and possibly a cell phone 13.

The fixed equipment mainly comprises a body containing - even if not shown - a Wi-Fi device for the transmission of the radio signal according to the known standards and at least one system set up for the transmission of messages (GSM card or the like). The distributor body will also be provided with at least one system for inserting and enabling the user to view the data inserted, such as a traditional keyboard 14 with display 15 or a display with touch screen technology or something similar, a coin receiver 16 for payment using coins, and/or a banknote reader 17 and/or a credit card reader 18, a possible printer system 19 for issuing the receipt, a possible document reader 20 with a system for filing the data taken from documents in the standard forms, such as identity cards, driving licenses, etc.

The various devices and electric and electronic equipment will be combined and connected to enable correct functioning.

The equipment may likewise comprise a system for possibly managing the telephone numbers selected for connection, through, for example, applying a distinction between the international dialling codes.

The method implemented on an automatic distributor using the method that envisages the use of a cell phone besides the device for Wi-Fi connection, is described in the following passages.

The user may access the automatic distributor to insert identification data, in particular the number of his mobile phone, using the interfacing devices provided. Otherwise, the user, by using his own mobile connecting device, connects up to a start page provided by the provider, and registering using the same method, that is to say by supplying the cell phone number.

In response, the distributor activates a procedure to verify the data inserted, and in particular to check that the number of the cell phone provided belongs to one of the telephone providers authorized for the service.

Then, the user selects the duration of the connection he intends purchasing from among the options available, which is based on a preset cost and established by the provider of the service.

Once payment has been made, the distributor automatically sends a message to the phone number the user indicated containing the configuration data to be inserted into his own Wi-Fi device in order to connect up to the Internet.

In this way the data for connecting can only be used by the owner of the cell phone.

After configuring the system with the activating data, a connection to the Internet is opened, login. During the user's work session, the fixed equipment can register all the operations carried out by regularly filing them in a LOG file.

At the end of the period purchased, the connection is automatically interrupted; logout.

The system can also be set up so that the user can prolong the end of the operating session before it falls due by activating an additional connection period procedure or by validating a repeat connection, perhaps by using a pass.

It is also possible to envisage a residual connections recovery system: should the connection terminate before the purchased time runs out, the connection can be re-established , otherwise the residual time would be lost.

As stated before, the distributor is preferably equipped with a traditional payment systems (coins, banknotes, credit card), but a it can also be implemented with a payment system directly to the cell phone credit or other alternative systems. The cell phone could in this way be beneficially the type configured with Wi-Fi technology.

The distributor could also be equipped with a documents reader 20 with a filing system of the data collected from standard type documents, such as identity cards, driving licenses, credit cards, fiscal codes, for the acquisition of certain user recognition and identification, instead of or in addition to the cell phone number.

This other method could, following payment, envisage the issuing of a receipt complete with the methods for the configuration of the Wi-Fi- device to the Internet.

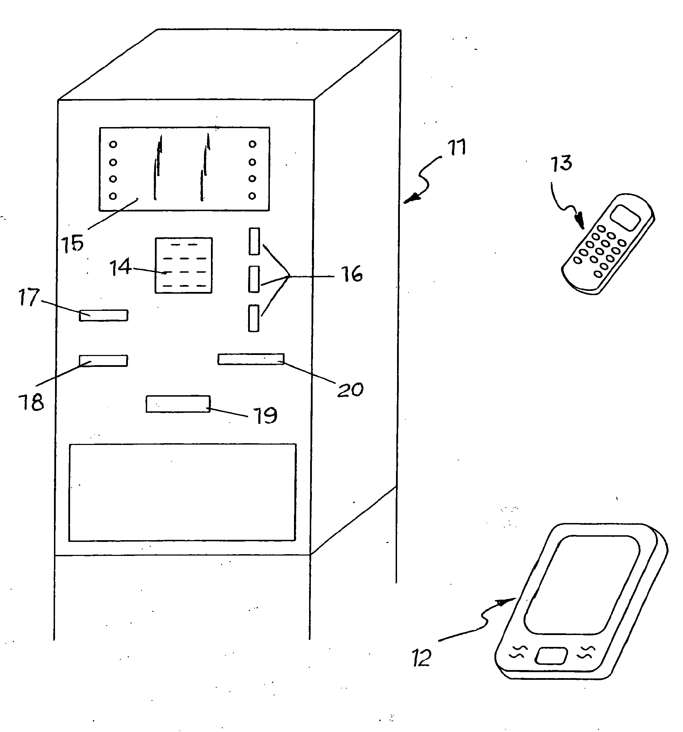

## Claims

1. Method for enabling a user to access the Internet by means of wireless devices, using a WI-FI connection, involving the following steps:
- insertion, by the user, of identification data into a stable equipment set up to distribute Wi-F- connections,
- control and filing of the identification data inserted into the stable equipment,
- payment to acquire a Wi-Fi time-based access connection,
- issue of configuration data (login) by the stable equipment in order to activate the internet connection through a movable device enabled for Wi-Fi connection,
- automatic interruption of the connection (logout) on termination of the time purchased and deactivation of the assigned configuration data.

2. Method according to claim 1, in which the identification data is the number of a cell phone inserted in the stable equipment.

3. Method according to claims 1 and 2, in which the cell phone number is supplied through the use of a direct punch in system on the stable equipment or through the movable device enabled for connection.

4. Method according to the previous claims, in which payment is carried out either through a coin acceptor, a banknote reader, a credit card reader or payment via cell phone bill.

5. Method according to previous claims, in which the issue of the configuration data in order to access the Internet is carried out by sending a message to the enabled cell phone.

6. Method according to claim 1, in which the identification data is read from a personal identification document attained by the stable equipment by means of a document reader.

7. Method according to claim 1, in which the identification data is made up of the cell phone number possibly combined with the identification read from a personal identification document attained by the stable equipment by means of a document reader.

8. Method according to claim 6, in which the supply of the configuration data to access the Internet is carried out by the issue of a pass by the stable equipment.

9. Method according to any of the previous claims comprising in addition the pass to store the operations carried by the user while connected to the Internet.

10. Stable equipment in the form of an automatic distributor combined with a movable device enabled for Wi-Fi connection to the Internet, and a possible message receiver mobile device, to perform the second method of the previous claims, **characterised in** the fact that it comprises a body containing at least o WI-FI device for transmitting a radio signal in a certain place, a system for inserting and displaying the identification data of each user, a device for fulfilling payment, a system set up for the transmission of messages to the mobile message receiver of the user, a printer system for issuing a pass, a data reader and filing system starting from the standard identification documents and various devices, and electric and electronic equipment combined and connected to enable correct functioning.
